(19)

Europäisches
Patentamt
European
Patent Office
Office européen
des brevets

(11) **EP 4 691 897 A1**

(12) **EUROPEAN PATENT APPLICATION**
published in accordance with Art. 153(4) EPC

(43) Date of publication:
**11.02.2026 Bulletin 2026/07**

(21) Application number: 24884893.9

(22) Date of filing: **31.10.2024**

(51) International Patent Classification (IPC):
***B63B 11/04*** *(2006.01)*       ***B63B 11/02*** *(2006.01)*
***B63B 71/00*** *(2020.01)*

(86) International application number:
**PCT/CN2024/128854**

(87) International publication number:
**WO 2025/092893 (08.05.2025 Gazette 2025/19)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:   **03.11.2023   CN 202311452921**

(71) Applicant: **Dalian Shipbuilding Industry Co. Ltd
Dalian, Liaoning 116021 (CN)**

(72) Inventors:
• **ZHANG, Qian
Dalian, Liaoning 116000 (CN)**
• **LIU, Guolei
Dalian, Liaoning 116000 (CN)**
• **GUAN, Yinghua
Dalian, Liaoning 116000 (CN)**

• **LI, Jiahuan
Dalian, Liaoning 116000 (CN)**
• **MEI, Rongbing
Dalian, Liaoning 116000 (CN)**
• **LI, Jiming
Dalian, Liaoning 116000 (CN)**
• **LI, Wenhe
Dalian, Liaoning 116000 (CN)**
• **CHEN, Li
Dalian, Liaoning 116000 (CN)**
• **WANG, Jingyang
Dalian, Liaoning 116000 (CN)**
• **QIAN, Jing
Dalian, Liaoning 116000 (CN)**
• **YU, Zhuorong
Dalian, Liaoning 116000 (CN)**

(74) Representative: **Plavsa, Olga
Plavsa & Plavsa
Patentna kancelarija
Strumicka 51
11050 Beograd (RS)**

(54) **METHOD FOR PROVIDING EMBEDDED METHANOL BUNKER IN ULTRA-LARGE OIL TANKER**

(57)     A method for installing embedded methanol fuel tanks in ultra-large crude oil carrier is disclosed, wherein a plurality of rows of cargo holds are provided in a cargo hold area, a middle cargo hold is in the center of each row of cargo holds, a first transverse hold wall (1) is additionally provided in one of the middle cargo holds, and a methanol bunker is provided between the first transverse hold wall (1) and the transverse hold wall (10) of the middle cargo hold. The method comprises: determining the capacity C of the methanol bunker, determining the total length L1 and the width B1 of the methanol bunker for the first time, determining the number Ni of reinforced bulkhead spacings of the cargo hold occupied by the methanol bunker, determining relative positions of a newly added transverse hold wall (5) and a newly added longitudinal hold wall (6), and providing swash bulkheads (2) and cross braces (7) in side cargo holds on the two sides of the middle cargo hold where the methanol bunker is located. The method for providing an embedded methanol bunker in an ultra-large oil tanker can simplify the construction process, reduce the structural weight, reduce the number of members, shorten the construction period, and reduce the weight of an empty tanker.

| Cargo hold on the left side of X | | Cargo hold on the left side of Y |
|---|---|---|
| Cargo hold on the middle of | Methanol fuel tank | Cargo hold on the middle of Y |
| Cargo hold on the right side of X | | Cargo hold on the right side of Y |

Figure 8

EP 4 691 897 A1

**Description**

**TECHNICAL FIELD**

This invention relates to the field of shipbuilding and design, specifically relates a method for installing embedded methanol fuel tanks in ultra-large crude oil carriers.

**BACKGROUND**

With the limitation of carbon emissions, global production of green methanol is on the rise. As a marine fuel, methanol can reduce approximately 99% of sulfur oxides (SOx), 80% of nitrogen oxide emissions, and up to 25% of carbon dioxide emissions. Green methanol has broad development potential globally as a marine fuel, with 122 of the world's top 100 ports capable of adding methanol fuel. Deloitte predicts that half of the ships ordered after 2025 will adopt dual-fuel engines, with a significant proportion opting for methanol.

As of September 2022, modern shipyards have secured orders for at least 15 methanol-fueled vessels, primarily comprising MR-type methanol carriers and 16,000 TEU container ships. Methanol fuel, as the primary propulsion, has never been applied to ultra-large crude oil carriers (ULCCs). Unlike other ship types, which predominantly feature bilaterally symmetrical compartment arrangements, ULCCs have a unique three-compartment arrangement in their transverse section, consisting of two side compartments and one central compartment. This characteristic of ULCCs' compartment arrangement is also reflected in the present invention. The methanol fuel tank of the present invention is positioned in the middle compartment of the cargo tank, eliminating the need for a separate methanol fuel system and simultaneously avoiding the issue of vessel tilt that arises when the methanol fuel tank is used on both sides.

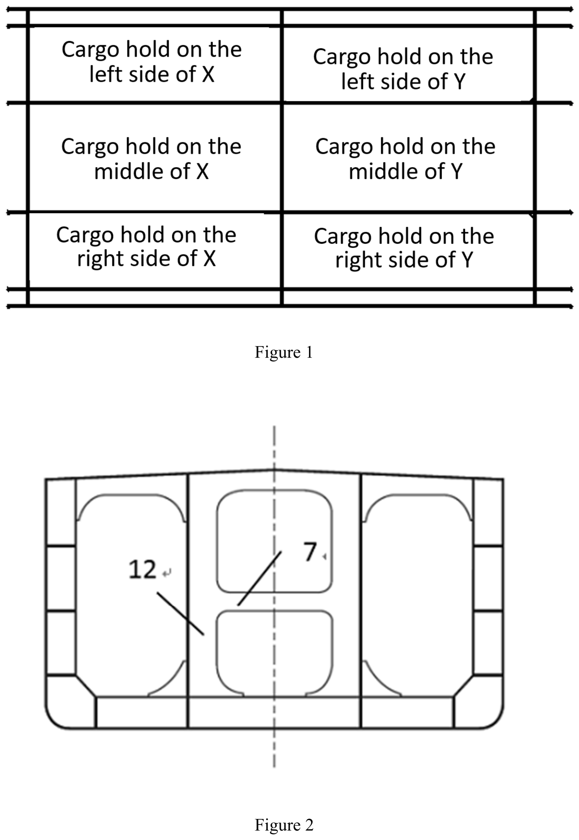

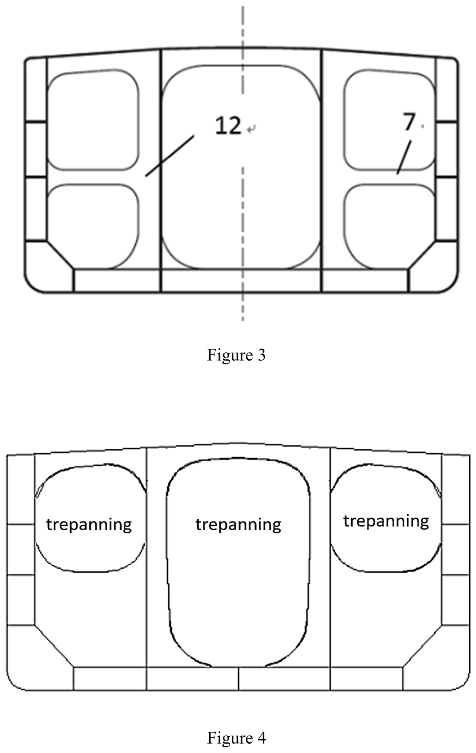

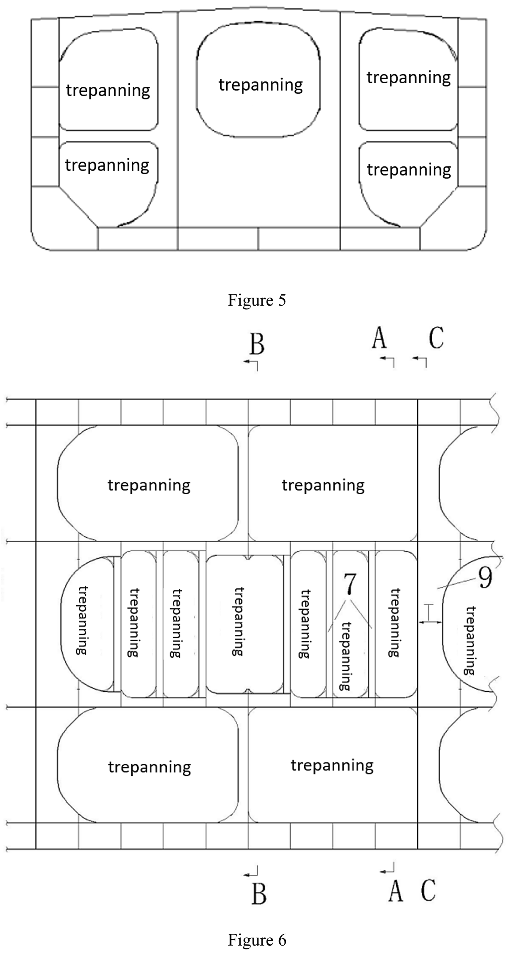

Figures 1 to 7 depict the layout views and typical cross-sectional views of existing ULCCs cargo tanks with transverse bracing structures. Due to construction convenience, only one type of transverse bracing is typically used for construction, and there are currently no ships that employ two types of transverse bracing within a single cargo tank. There are two types of cross-sectional arrangements in existing technology, and both of these types are utilized in the present invention, while also introducing a third type of cross-sectional arrangement. The first type of cross-sectional arrangement is characterized by Figure 3, where the transverse bracing 7 is located in the middle cargo tank, and the vertical girder 12 is also arranged in the middle cargo tank. The second type of cross-sectional arrangement is characterized by Figure 4, where the transverse bracing 7 is located in the side cargo tanks, and the vertical girder 12 is also arranged in the side cargo tanks.

One difficulty in the application of methanol fuel tanks on ships is that they occupy too much space, affecting the capacity of cargo tanks. Another difficulty is that methanol fuel tanks require special coating, which is expensive due to methanol's corrosive nature. Therefore, it is necessary to minimize the presence of components inside the tank.

**SUMMARY**

To address the aforementioned issues, the present invention provides a method for installing embedded methanol fuel tanks in ultra-large crude oil carriers. This method aims to achieve the rational utilization of the existing cargo tank structure, optimize structural layout, arrange the support structure for the methanol fuel tanks, reduce the increase in structural weight, and lower the difficulty of construction. The technical solution adopted is as follows:

A method for installing embedded methanol fuel tanks in ultra-large crude oil carrier involves setting up multiple rows of cargo tanks in the cargo area. The center of each row of cargo tanks is a central cargo tank, flanked by side cargo tanks on both sides. A first transverse bulkhead is added to one of the central cargo tanks. The two ends of the first transverse bulkhead intersect and are fixed to the longitudinal bulkheads of the central cargo tank. A methanol fuel tank is located between the first transverse bulkhead and the transverse bulkhead of the central cargo tank. The methanol fuel tank is a cubic container composed of two additional transverse bulkheads and two additional longitudinal bulkheads. The methanol fuel tank is surrounded by isolation tanks. The original bulkheads of the central cargo tank and the new bulkheads of the methanol fuel tank serve as the bulkheads of the isolation tanks. The outer surfaces of the front and rear isolation tanks of the methanol fuel tank are equipped with horizontal girders. The specific design method of the methanol fuel tank is as follows:

S1: Determine the capacity C of the methanol fuel tank

$$C=\{(M/V/d+n)*(P1+P2)+P3\}/(\rho*R);$$

Where M represents the mileage;

V represents the speed;

d represents the number of days;

P1 represents the daily methanol consumption of the generator;

P2 represents the daily methanol consumption of the main engine;

P3 represents the daily methanol consumption of the boiler;

n represents the reserve quantity;

ρ represents the density of methanol;

R represents the fuel fullness = according to the IGF low flash point, the fuel fullness is 95%-2% = 93%.

S2: Based on the tank capacity C obtained in step S1, the total length L1 and width B1 of the methanol fuel tank are initially determined,

The length Ln of the methanol fuel tank is Ln=C/Ac-2W, m;
The total length of the methanol fuel tank is given by the formula L1 = C/Ac = Ln + 2W;
Where Ac represents the cross-sectional area of the methanol fuel tank, and Ac=D*B1, m2;

B1=B-2R, measured in meters;

D represents the average height of the clean methanol fuel tank, measured in meters;

W represents the width of the transverse isolation tank on both sides outside the methanol fuel tank, measured in meters;

R represents the width of the longitudinal isolation tank on both sides outside the methanol fuel tank, measured in meters;

B represents the maximum width of the middle cargo tank.

S3: Determine the number of strong frame spacings, Ni, within the cargo hold section occupied by the methanol fuel tank

When

$$L1/S - [L1/S] \leq 0, \ Ni = [L1/S];$$

When

$$L1/S - [L1/S] > 0, \ Ni = [L1/S] + 1;$$

Where [L1/S] represents the integer part of the calculated value.

S4: Determine the relative positions of the newly added transverse bulkheads and longitudinal bulkheads,

When B1 > L1, the two ends of the newly added longitudinal bulkhead intersect and are fixed with the first transverse bulkhead and the middle cargo tank transverse bulkhead, respectively. The end of the newly added longitudinal bulkhead aligns with the reinforcement ribs on the first transverse bulkhead; the end of the newly added transverse bulkhead intersects and is fixed with the newly added longitudinal bulkhead;

When L1≥B1, the two ends of the newly added transverse bulkhead intersect and are fixed with the longitudinal bulkhead of the middle cargo tank; the end of the newly added longitudinal bulkhead intersects and is fixed with the newly added transverse bulkhead, and the end of the newly added longitudinal bulkhead aligns with the reinforcing rib on the newly added transverse bulkhead;

The distance between the newly added longitudinal bulkhead and the longitudinal bulkhead of the middle cargo tank is R, where $R \geq 600 + M$, and M represents the spacing between adjacent stiffeners on the longitudinal bulkhead of the middle cargo tank;

The distance between the newly added transverse bulkhead and the transverse bulkhead of the middle cargo tank is W, where $R \geq W \geq 600 + V$, and V represents the spacing between adjacent stiffeners on the transverse bulkhead of the middle cargo tank;

Finally, the length of the methanol fuel tank is determined as L11=S*Ni-2W, and the width of the methanol fuel tank is determined as B11=B-2R.

S5: In the side cargo tanks located on both sides of the middle cargo tank where the methanol fuel tank is situated, anti-sway bulkheads are installed. These anti-sway bulkheads are connected to the first transverse bulkhead, forming a continuous bulkhead within the side and middle cargo tanks. The anti-sway bulkheads are equipped with horizontal girders, which have the same number and position as the horizontal girders on the first transverse bulkhead.

S6: Set up crossbeams,

The methanol fuel tank compartment divides the original cargo tank into a methanol fuel tank area and a cargo area, while the anti-sway bulkhead divides the side cargo tank into two areas. The length of the methanol fuel tank area is L2, and the length of the cargo area is L3;

When

$$2 \leq Ni \leq 3,$$

L3>L2, with multiple transverse beams arranged within the cargo tank area of the main cargo tank;

B1>L1, the horizontal girder width of the first transverse bulkhead is U, with $T/2 \geq U \geq 600mm$; the horizontal girder width of the transverse bulkhead in the middle cargo tank is P, with $2T/3 \geq P \geq U$, where T represents the horizontal girder width of the transverse bulkhead in the middle cargo tank;

When

$$3 < Ni \leq 5,$$

L3<L2, multiple crossbeams are arranged in the side cargo tanks,

Multiple crossbeams are arranged in the side cargo tank, corresponding to the cargo area of the middle cargo tank;

Inside the side cargo tank, a crossbeam is installed at a location corresponding to the methanol fuel tank area in the middle cargo tank, which divides the area corresponding to the methanol fuel tank into an M area with a length of M and a Q area with a length of Q,

The length of the methanol fuel tank area is Ni*S,

$2 \leq Q \leq M \leq 3$, Q = 2. If Ni is even, a horizontal brace is set at Q = Ni * S / 2;

If Ni is an odd number, a horizontal brace is set at Q = (Ni-1) *S/2;

For L1 > B1, the horizontal girder width of the first transverse bulkhead is U, where $T/2 \geq U \geq 600mm$. The horizontal girder width on the transverse bulkhead of the middle cargo tank is P, where $2T/3 \geq P \geq U$, and T represents the horizontal girder width of the transverse bulkhead of the middle cargo tank;

When

$$6 \leq Ni < N-1,$$

$L3 \leq 0.5L2$, $L1 > B1$, the anti-sway bulkhead within the side cargo tank is a bidirectional panel, and the crossbeam is arranged within the methanol fuel tank;

The length of the methanol fuel tank is Ni*S, and two crossbeams divide the side cargo tank into compartments with lengths N, M, and Q along the length direction, where $N \geq M \geq Q$, $2 \leq Q \leq M \leq N \leq 3$,

If Ni is not a prime number, two crossbeams are set at equal intervals within the side cargo tank, with the crossbeam panels facing forward;

If Ni is a prime number, the crossbeam should be positioned at the combination of 2S and 3S, with 3S situated near the anti-sway bulkhead, and the crossbeam panel facing the anti-sway bulkhead;

The horizontal girder width of the first transverse bulkhead is U, with $T2/3 \geq U \geq 600mm$. The horizontal girder width on the transverse bulkhead of the middle cargo tank is P, with $2T/3 \geq P \geq U$, where T represents the horizontal girder width of the middle cargo tank's transverse bulkhead. The T and P values differ for the three types of crossbeams, and the data varies according to different arrangements. The horizontal girder supports the transverse bulkhead, while the crossbeam supports the longitudinal bulkhead, which are different.

In the aforementioned a method for installing embedded methanol fuel tanks in ultra-large crude oil carrier, further, multiple rows of cargo tanks are arranged along the length of the ship in the cargo area, with each row of cargo tanks consisting of a central cargo tank and side cargo tanks arranged sequentially from the center of the hull towards the ship's sides.

Regarding the aforementioned method for installing embedded methanol fuel tanks in ultra-large crude oil carrier, further, in step S1, n=3 and $\rho=0.79t/m3$.

Regarding the aforementioned method for installing embedded methanol fuel tanks in ultra-large crude oil carrier, further, in step S2, W is initially set to 1.2m, and R is also initially set to 1.2m.

Regarding the aforementioned method of installing embedded methanol fuel tanks in ultra-large crude oil carrier, further, the forward isolation tank is composed of the first transverse bulkhead, an additional transverse bulkhead, and an additional longitudinal bulkhead, while the aft isolation tank is composed of the additional transverse bulkhead, the middle cargo tank transverse bulkhead, and the additional longitudinal bulkhead.

Regarding the aforementioned method of installing embedded methanol fuel tanks in ultra-large crude oil carrier, further, the first transverse bulkhead is fixed at the strong structure of the middle cargo tank.

The aforementioned method of installing embedded methanol fuel tanks in ultra-large crude oil carrier further involves designing the width of the horizontal girders (3) in accordance with the specifications set out in Part 2, Chapter 2, Section 3 of the Common Structural Rules for Bulk Carriers and Oil Tankers, an industry standard of the International Association of Classification Societies. The number and location of horizontal girders (3) on the outer surfaces of the forward and aft isolation tanks of the methanol fuel tank are identical.

In the aforementioned method for installing embedded methanol fuel tanks in ultra-large crude oil carrier, furthermore, the number of reinforcement ribs on the first transverse bulkhead, the newly added transverse bulkhead, and the middle cargo tank transverse bulkhead is the same, as is the spacing between adjacent reinforcement ribs.

In the aforementioned a method for installing embedded methanol fuel tanks in ultra-large crude oil carrier, further, the methanol fuel tanks are strong frame spacing frame spacing of S, and the number of strong frame spacings is N, where 6 < N < 10.

To meet the regulatory requirements for double-walled structural protection between the methanol fuel tank and the cargo tank, this invention fully utilizes the three-sided structural arrangement characteristics of two longitudinal bulkheads and one transverse bulkhead in the cargo tank area of an ultra-large crude oil carrier. A new transverse bulkhead structure is added in the middle of the middle cargo tank, forming an outer wall with double-walled structural protection. Inside the outer wall with double-walled structural protection, four structural bulkheads of the methanol fuel tank are arranged, forming an inner wall with double-walled structural protection. Based on the tank capacity of the methanol fuel tank, by setting up reinforced structures for the methanol fuel tank, middle cargo tank, and side cargo tanks that meet different tank capacity requirements, and fully utilizing the arrangement characteristics of the ULCC, a combination of two existing crossbeams and one newly designed crossbeam is selected to achieve structural strength requirements with minimal structure. At the same time, considering the special coating requirements of the methanol fuel tank, components inside the tank are minimized to reduce the cost of the methanol fuel tank. This invention also takes into account the characteristics of ULCCs, providing a basis for new ship design and a reference for retrofitting old ships. It simplifies the construction process, reduces structural weight, decreases the number of components, shortens the construction period, and reduces the lightweight displacement.

**BRIEF DESCRIPTION OF THE DRAWINGS**

Figure 1 is a schematic view of the cargo tank structure of an existing ultra-large crude oil carrier (ULCC);

Figure 2 is a structural schematic view of the arrangement of transverse and longitudinal braces in the cargo tank of existing ultra-large crude oil carriers;

Figure 3 is a structural schematic view of the existing ultra-large crude oil carrier with transverse and longitudinal braces set up in the side cargo tanks;

Figure 4 is a schematic view of the gear-making bulkhead structure corresponding to Figure 2;

Figure 5 is a schematic view of the gear-making bulkhead structure corresponding to Figure 3;

Figure 6 is a schematic view of the horizontal girder structure corresponding to Figure 2;

Figure 7 is a schematic view of the horizontal girder structure corresponding to Figure 3;

Figure 8 is a structural schematic view of the embedded methanol fuel tank located in the middle cargo tank;

Figure 9 is a schematic view of the methanol fuel tank structure when B1 > L1;

Figure 10 is a structural schematic view of the crossbeam installed in the middle cargo tank;

Figure 11 is a structural schematic view of the crossbeam installed in the side cargo tank;

Figure 12 is a structural schematic view of the partial arrangement of crossbeams in the side cargo tank;

Figure 13 is a schematic view of the structure from the B-B perspective in Figure 10;

Figure 14 is a schematic view of the structure from the E-E perspective in Figure 10;

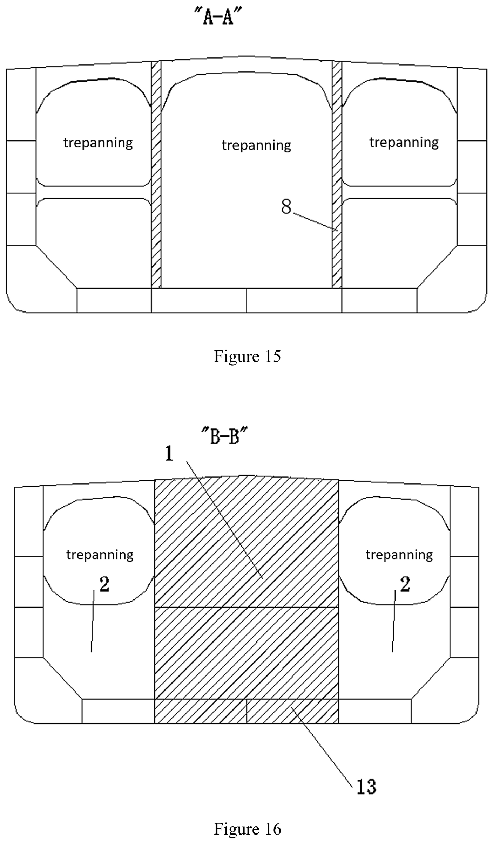

Figure 15 is a schematic view of the structure from the A-A perspective in Figure 11;

Figure 16 is a schematic view of the structure from the B-B perspective in Figure 11;

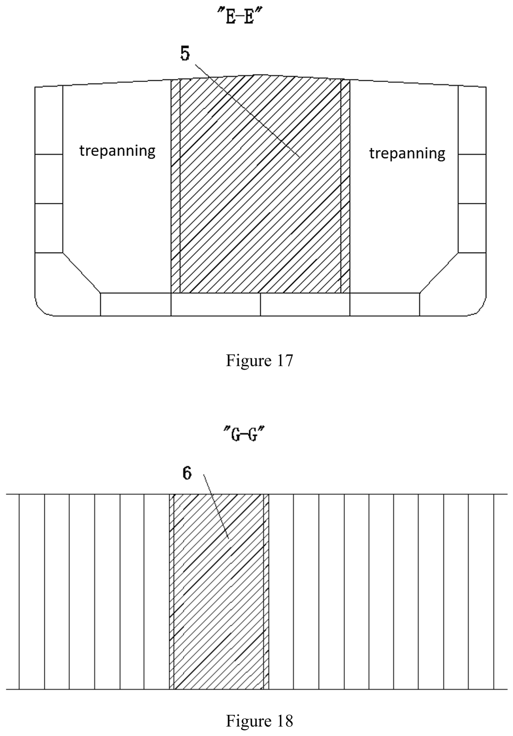

Figure 17 is a schematic view of the structure from the E-E perspective in Figure 11;

Figure 18 is a schematic view of the structure from the G-G perspective in Figure 11;

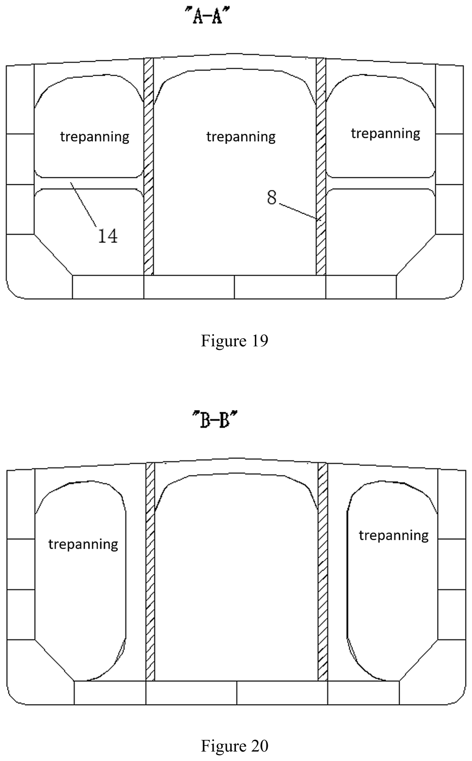

Figure 19 is a schematic view of the structure from the A-A perspective in Figure 12;

Figure 20 is a schematic view of the structure from the B-B perspective in Figure 12;

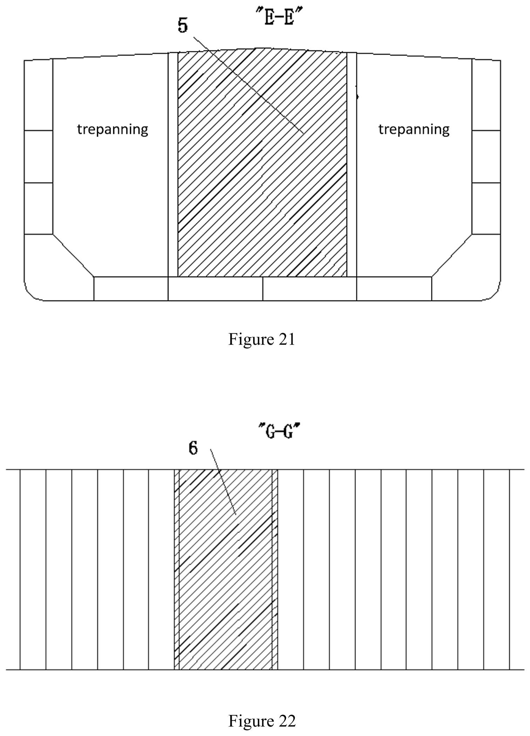

Figure 21 is a schematic view of the structure from the E-E perspective in Figure 12;

Figure 22 is a schematic view of the structure from the G-G perspective in Figure 12;

Figure 23 is a schematic view of the methanol fuel tank structure when B1 ≤ L1.

Among them: 1 - First transverse bulkhead, 2 - Anti-sway bulkhead, 3 - Horizontal girder, 5 - New transverse bulkhead, 6 - New longitudinal bulkhead, 7 - Crossbeam, 8 - Structure between the isolation bulkhead and the longitudinal bulkhead, 9 - Horizontal girder corresponding to the transverse bulkhead of the middle cargo tank, 10 - Transverse bulkhead of the middle cargo tank, 11 - Longitudinal bulkhead of the middle cargo tank, 12 - Vertical girder.

**DETAILED DESCRIPTION OF THE EMBODIMENTS**

The invention is further described in conjunction with the accompanying drawings.

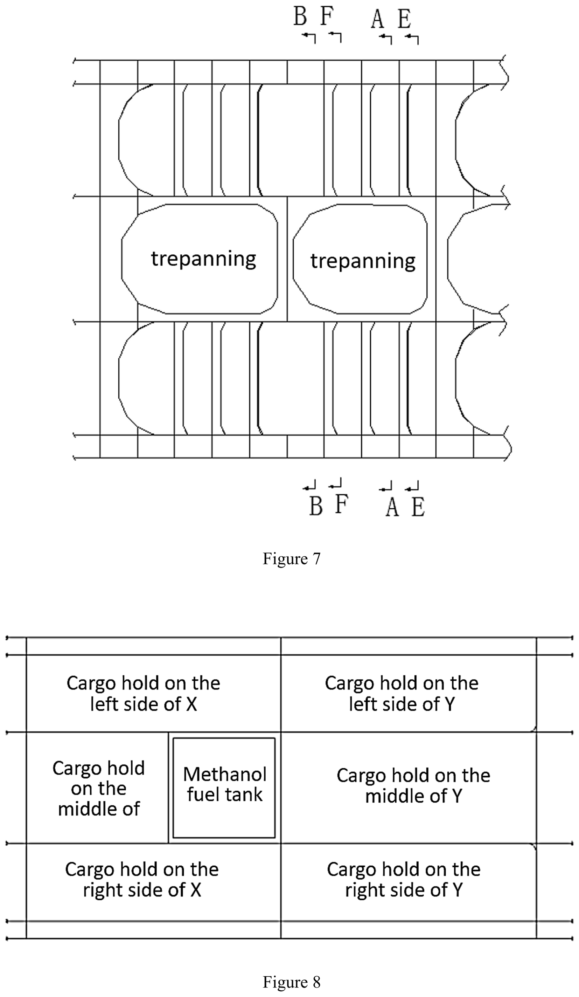

As shown in Figure 8, the methanol fuel tank of the present invention is arranged in the middle cargo tank of a ultra-large crude oil carrier (ULCC) at the same location. The main advantage is that placing it in the middle cargo tank will not cause a list problem as the methanol fuel is consumed, and it will gradually reduce the sagging bending moment stress. A design method for embedding methanol fuel tanks in the middle cargo tank of a ULCC involves setting the size of the methanol fuel tank according to the tank capacity in the middle hold of the ULCC. Different sizes of methanol fuel tanks correspond to different numbers of crossbeam reinforcement structures.

The cargo tank length of the methanol fuel tank is L (m), the spacing between strong frames is S, and the number of strong frame spacings is N, where 6 < N < 10. The specific design method is as follows:

S1: Calculation of the capacity C of the methanol fuel tank.

$$C = \{(M/V/d + n) * (P1 + P2) + P3\} / (\rho * R).$$

Where: M represents mileage.

V represents the speed.

d represents the number of days.

P1 represents the daily methanol consumption of the generator.

P2 represents the daily methanol consumption of the main engine.

P3 represents the daily methanol consumption of the boiler.

n represents the reserve quantity, typically set at the consumption of methanol fuel for 3 days, which can be adjusted according to the shipowner's requirements.

$\rho$ represents the density of methanol, typically taken as 0.79 t/m3, which can be adjusted according to the actual available methanol fuel density provided by the shipowner.

R represents the fuel fullness = According to the IGF low flash point, the fuel fullness is 95%-2% = 93%.

S2: The total length L1 and width B1 of the methanol fuel tank are determined for the first time.

The length of the methanol fuel tank, Ln, is given by Ln = C/Ac - 2W, measured in meters, and is subsequently corrected to L11.

The total length of the methanol fuel tank, is given by the formula L1 = C/Ac = Ln + 2W.

C represents the capacity of the methanol fuel tank in S1, measured in cubic meters $m^3$.

Ac represents the cross-sectional area of the methanol fuel tank, where Ac=D*B1, measured in square meters $m^2$.

The width of the methanol fuel tank is determined as B1=B-2R, measured in meters.

D represents the average height of the clean methanol fuel tank, measured in meters.

W represents the width of the transverse isolation tank on both sides of the methanol fuel tank, measured in meters. Initially, it is set at 1.2 meters, and subsequently adjusted to L11.

R represents the width of the longitudinal isolation tank on both sides outside the methanol fuel tank, measured in meters. Initially, it is set at 1.2 meters, and subsequently adjusted to B11.

S3: Determine the number of strong frame spacings, Ni, within the cargo hold section occupied by the methanol fuel tank.

Where Ni=[L1/S], when L1/S-[L1/S] ≤0.

Ni=[L1/S] +1, when L1/S - [L1/S] > 0.

Where [L1/S] represents the integer part of the calculated value.

S4: Evaluate Ni. Select the crossbeam for this cargo tank.

When 2 ≤ Ni ≤ 3, proceed to S5, S6, and S7.

When 3 < Ni ≤ 5, proceed to S5, S6, and S8.

When 5 < Ni ≤ N-1, proceed to S5, S6, and S9.

$$L2=Ni*S.$$

S5: Structural design of embedded methanol fuel tanks.

The structural design of the embedded methanol fuel tank includes the first transverse bulkhead 1 of the double-walled methanol fuel tank structure, the horizontal girder 3 supporting the first transverse bulkhead 1 of the outer wall structure, the horizontal girder of the transverse bulkhead 10 in the middle cargo tank optimized by applying the double-walled structure, the newly added transverse bulkhead 5 in the inner wall structure of the double-walled methanol fuel tank structure, the newly added longitudinal bulkhead 6 in the inner wall structure of the double-walled methanol fuel tank structure, and the removal of the double-walled intermediate vertical support structure 8 of the double-walled methanol fuel tank structure with crossbeam 7, meaning that no crossbeam structure is set up inside the methanol fuel tank, adopting a quasi-clean tank design.

The outer wall structure of the double-walled methanol fuel tank is composed of the first transverse bulkhead 1, which is arranged inside the main cargo tank. Together with the three-sided structure of the existing two longitudinal bulkheads 11 and one main cargo tank transverse bulkhead 10 in the cargo tank area, they enclose the outer wall structure of the double-walled methanol fuel tank. Due to the presence of horizontal girders 9 supporting the transverse bulkhead on the front side of the main cargo tank transverse bulkhead 10, to reduce the internal structure of the methanol fuel tank, the first transverse bulkhead 1 is arranged on the rear side of the intended main cargo tank. The first transverse bulkhead 1 is positioned at the location of the strong structure of the main cargo tank, with a distance L2 between the first transverse bulkhead 1 and the existing main cargo tank transverse bulkhead 10. For ease of construction, the reinforcement structure on the outer wall structure of the first transverse bulkhead 1 is arranged and spaced in the same manner as the existing main cargo tank transverse bulkhead 10, and the reinforcement structure is arranged on the rear side of the outer wall structure of the first transverse bulkhead 1.

Due to the need for longitudinal strong support for the outer hull structure's first transverse bulkhead 1, a horizontal girder 3 is installed on the rear side of the first transverse bulkhead 1. Since the first transverse bulkhead 1 of the outer hull structure and the methanol fuel tank bulkhead 5 form a double-walled structure with greater strength than the original middle cargo tank transverse bulkhead 10, the width of the horizontal girder 3 is U, which is designed according to the specifications in Part 2, Chapter 2, Section 3 of the Common Structural Rules for Bulk Carriers and Oil Tankers, an industry standard of the International Association of Classification Societies. The number and height positions of the horizontal girder 3 are consistent with those of the horizontal girder 9 of the original middle cargo tank transverse bulkhead 10, forming a longitudinal continuous support that effectively transfers longitudinal loads.

Due to the double-walled structure of the middle cargo tank transverse bulkhead 10 and the methanol fuel tank structural bulkhead 5, which has greater strength than the middle cargo tank transverse bulkhead 10, the width of the horizontal girder can be optimized using a double-walled structure. Additionally, since the original middle cargo tank transverse bulkhead 10 also supports the transverse bulkheads of the left and right cargo tanks, the width of the horizontal girder 4 of the middle cargo tank transverse bulkhead 10 is P, which is designed according to the requirements of Part 2, Chapter 2, Section 3 of the Common Structural Rules for Bulk Carriers and Oil Tankers, an industry standard of the International Association of Classification Societies.

The preliminary length of the embedded methanol fuel tank is L1, and its width is B1.

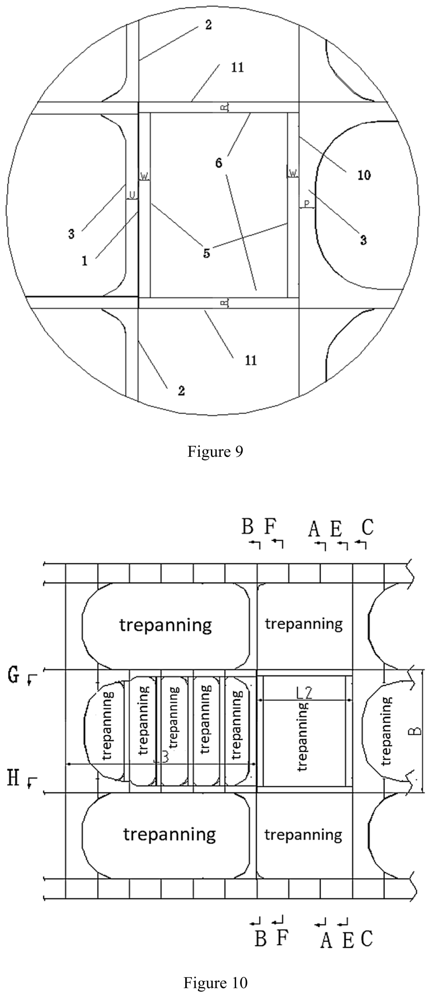

When B1 > L1, as shown in Figure 9, a methanol fuel tank longitudinal bulkhead 6 is set up on the inner side of the original two longitudinal bulkheads 11. The left and right endpoints of the longitudinal bulkhead 6 are located at the first transverse bulkhead 1 and the cargo tank transverse bulkhead 10, aligning with the stiffeners on the first transverse bulkhead 1 at the endpoints. On the inner side of the first transverse bulkhead 1 and the cargo tank transverse bulkhead 10, a methanol fuel tank transverse bulkhead 5 is set up. The left and right endpoints of the transverse bulkhead 5 are located at the methanol fuel tank longitudinal bulkhead 6, shortening the transverse length of the methanol fuel tank transverse bulkhead 5, optimizing the structure, and reducing weight.

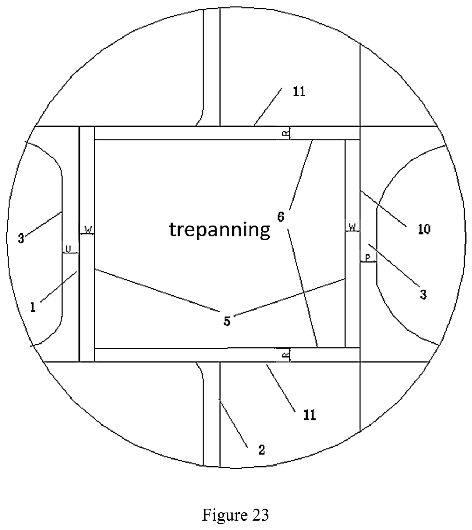

When L1 ≥ B1, as shown in Figure 23, a methanol fuel tank transverse bulkhead 5 is arranged on the inner side of the first transverse bulkhead 1 and the middle cargo tank transverse bulkhead 10. The left and right endpoints of the transverse bulkhead 5 are located at the methanol fuel tank longitudinal bulkhead 11, shortening the longitudinal length of the methanol fuel tank longitudinal bulkhead 6, optimizing the structure, and reducing the weight. On the inner side of the original two longitudinal bulkheads 11, a methanol fuel tank longitudinal bulkhead 6 is arranged, with its left and right endpoints located at the methanol fuel tank inner wall 5, aligning with the stiffeners on the transverse bulkhead 5 at the endpoints;

To facilitate construction, the reinforcing rib structure on the longitudinal bulkhead 6 of the methanol fuel tank is arranged with the same spacing as the original longitudinal bulkhead 11, and is positioned on the outer side of the longitudinal bulkhead 6 of the methanol fuel tank. Since a maintenance passage needs to be arranged between the longitudinal bulkhead 6 of the methanol fuel tank and the original longitudinal bulkhead 11, as well as the reinforcing rib structures of both bulkheads, the distance R between the longitudinal bulkhead 6 of the methanol fuel tank and the original longitudinal bulkhead 11 is set to be R ≥ 600 + M, where M represents the spacing between the reinforcing ribs of the longitudinal bulkhead 11. The reinforcing rib structure on the transverse bulkhead 5 of the methanol fuel tank is arranged with the same spacing as the original transverse bulkhead 10 of the cargo tank, and is positioned on the outer side of the transverse bulkhead 5 of the methanol fuel tank. Since a maintenance passage needs to be arranged between the transverse bulkhead 5 of the methanol fuel tank and the original transverse bulkhead 10 of the cargo tank, as well as the reinforcing rib structures of both bulkheads, the distance W between the transverse bulkhead 5 of the methanol fuel tank and the original transverse bulkhead 10 of the cargo tank is set to be R ≥ W ≥ 600 + V, where V represents the spacing between the reinforcing ribs of the original transverse bulkhead 10 of the cargo tank.

The length of the embedded methanol fuel tank is ultimately corrected to L11=S*Ni-2W, and the width is B11=B-2R.

S6: Design of the anti-sway bulkhead.

The function of the anti-sloshing bulkhead is twofold: firstly, to reduce the sloshing forces in the side cargo tanks, and secondly, to support the two longitudinal bulkheads and minimize deformation. According to regulatory requirements, if the distance between the anti-sloshing bulkhead and the cargo tank bulkhead exceeds 35 meters, an additional anti-sloshing bulkhead must be installed in the cargo tank. Based on the structural design characteristics and positional relationships of the anti-sloshing bulkhead, this invention relocates the anti-sloshing bulkhead to align with the position of the newly added transverse bulkhead, forming a horizontally continuous support structure. This arrangement simultaneously meets the requirement that the distance between the anti-sloshing bulkhead and the cargo tank bulkhead should not exceed 35 meters, eliminating the need for additional anti-sloshing bulkhead structures.

Due to the need for aligned lateral strong supports in the left and right cargo tanks for the outer hull structure's first transverse bulkhead 1, in order to optimize structural layout and reduce structural weight, the position of the anti-sway bulkhead 2 is moved so that it aligns with the position of the outer hull structure's first transverse bulkhead 1, forming a laterally continuous support structure in the left and right cargo tanks. The load on the outer hull structure's first transverse bulkhead 1 can be effectively transferred to the double-side structure through the anti-sway bulkhead 2, achieving the effect of reducing stress levels. At the same time, the outer hull structure's first transverse bulkhead 1 also improves the end stress of the anti-sway bulkhead 2, enhancing structural safety.

S7: When 2 ≤ Ni ≤ 3, the cargo tank is divided into two areas, where the methanol fuel tank area has a length of L2, and the cargo tank area has a length of L3, with L3 > L2. In area L3, the section from the rear of the cargo tank to the bulkhead within the gear-making bulkhead adopts a traditional design of intermediate crossbeam support. Due to the relatively small size of the methanol fuel tank and its double-bulkhead design, the transverse support for the cargo tank at the corresponding position of the methanol fuel tank is eliminated, as shown in the horizontal girder structure view in Figure 7.

B1>L1, the longitudinal bulkhead of the methanol fuel tank is set between bulkheads 1 and 10, and the transverse bulkhead of the methanol fuel tank is set between bulkheads 5. The first transverse bulkhead 1 of the outer wall structure aligns with the gear-making bulkhead, and the panel structure on the gear-making bulkhead is arranged beyond the tank, which can shorten the longitudinal span of the side cargo tanks. The width of horizontal girder 3 is U, with T/2≥U≥600mm, and the width of horizontal girder 4 is P, with 2T/3≥P≥U, where T is the width of horizontal girder 9 of the original transverse bulkhead 10 of the middle cargo tank.

S8: When 3 < Ni ≤ 5, L3 < L2. The section of area L3, from the stern of the cargo tank to the bulkhead of the gear-making bulkhead, adopts a traditional design with cross-bracing support structures on both sides of the hold. Since L1 > B1, the methanol fuel tank transverse bulkhead 5 is arranged between continuous longitudinal bulkheads 11, and the methanol fuel tank longitudinal bulkhead 6 is arranged between the methanol fuel tank transverse bulkhead 5, effectively reducing the span of the methanol fuel tank longitudinal bulkhead 6. The panel direction of the cross-bracing structure faces the bow, so that the panel of the cross-bracing structure can effectively support the methanol fuel tank transverse bulkhead 5. The length of the large toggle plate of the cross-bracing panel is greater than the spacing W between methanol fuel tanks.

Due to the large length of the methanol fuel tank, despite its double-walled structure, it is still necessary to install crossbeams within the methanol fuel tank.

The length of the methanol fuel tank is Ni*S, and the side tank is divided into sections with lengths of M and Q along the length direction, where M≥Q, 2 ≤ Q ≤ M ≤ 3, with Q preferably being 2. If Ni is even, the crossbeam is set at Q = Ni*S/2, that is, in the cabin, with its crossbeam panel facing forward. If Ni is odd, the crossbeam is set at Q = (Ni-1) *S/2, that is, at a distance Q from the crossbeam setting point and the forward cabin wall. Since M ≥ Q, its panel direction faces backward, reducing the longitudinal span of the large spacing. The width of horizontal girder 3 is U, with T/2 ≥ U ≥ 600mm, and the width of horizontal girder 4 is P, with 2T/3 ≥ P ≥ U, where T is the width of the original middle cargo cabin transverse bulkhead 10 horizontal girder 9;

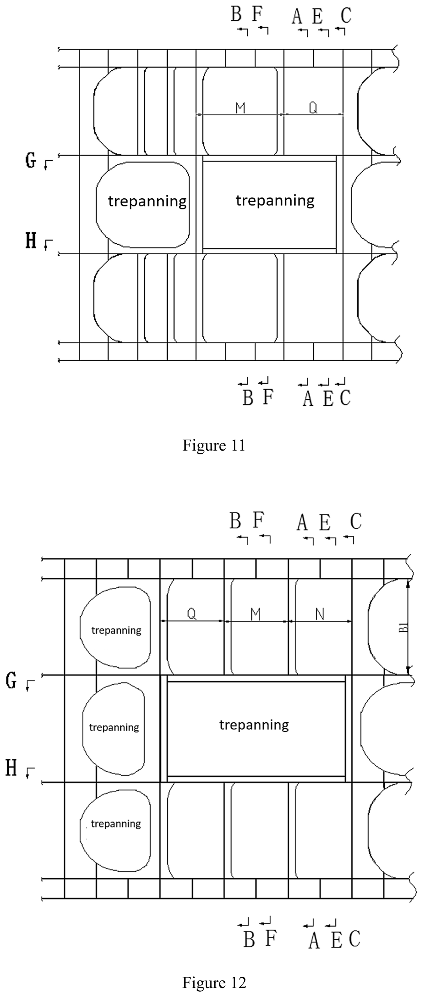

As shown in Figure 12, the unique support structure of the super large crude oil carrier in the present invention differs from the two types of crossbeams in traditional designs. It adopts a large bracket support, which is directly positioned between the inner hull and the longitudinal bulkhead. The vertical truss between traditional side cargo tanks is eliminated, and the vertical truss structure is positioned between the double bulkheads of the methanol fuel tank. This ensures the required strength while reducing the number of components and simplifying the construction process. Bulkhead 1 is consistent with Figure 9.

S9: When 6 ≤ Ni < N-1 and L3 ≤ 0.5L2, the cross-brace support structure is eliminated from the section extending from the rear of the cargo tank to the gear-making bulkhead. Since the methanol fuel tank L1 > B1, the gear-making bulkhead is equipped with a bidirectional panel, which effectively supports the transverse bulkhead 5 of the methanol fuel tank. The length of the large toggle plate of the cross-brace panel is greater than the spacing W between methanol fuel tanks.

Due to the relatively large length of the methanol fuel tank, despite its double-walled structure, it is still necessary to install crossbeams within the methanol fuel tank.

The length of the methanol fuel tank is Ni*S. The side tanks are divided into sections of lengths N, M, and Q along the length direction, where $N \geq M \geq Q$, $2 \leq Q \leq M \leq N \leq 3$. If Ni is a non-prime number, the crossbeams are arranged at equal intervals, that is, the side cargo tanks are supported at equal intervals, with the crossbeam panels facing forward. If Ni is a prime number, the crossbeams are arranged at positions combining 2S and 3S, with 3S positioned near the gear-making bulkhead, and the panels facing the gear-making bulkhead to reduce the longitudinal span of large intervals. The width of horizontal girder 3 is U, where $T2/3 \geq U \geq 600mm$, and the width of horizontal girder 4 is P, where $2T/3 \geq P \geq U$, with T being the width of horizontal girder 9 of the original middle cargo tank transverse bulkhead 10;

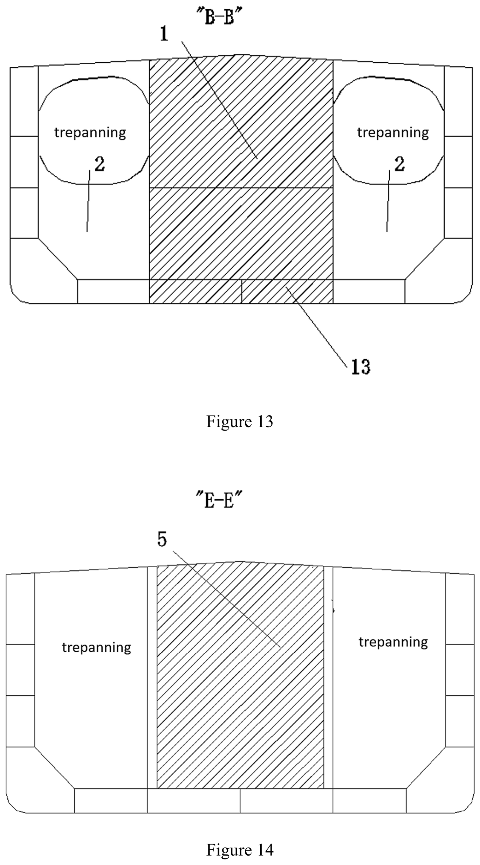

As shown in Figure 13, the unique support structure of the ultra-large crude oil carrier in the present invention differs from the two types of crossbeams in traditional designs. It adopts large bracket supports, which are directly positioned between the inner hull and the longitudinal bulkhead. The vertical trusses between traditional side cargo tanks are eliminated, and the vertical truss structure is arranged between the double bulkheads of the methanol fuel tank. This ensures the required strength while reducing the number of components and simplifying the construction process. Bulkhead 1 is consistent with Figure 9. In the side cargo tanks of the L2 area, crossbeams are eliminated and replaced with annular panel supports, saving the weight of the empty ship.

Due to the long side cargo tanks in the L2 area, C-shaped reinforced frames are installed between the newly designed transverse beams 14 to prevent liquid sloshing in the cargo tanks.

S10: The final capacity of the methanol fuel tank is C1, where C1 = L11 * B11 * D.

When C1/C > 95%, output the solution.

When C1/C is less than 95%, the width of the isolation tank needs to be modified to meet the requirements.

If modifying the isolation tank to the minimum size still fails to meet the requirements, it is necessary to increase the existing number of strong frames by Ni+1 and redesign them.

Taking a certain ship as an example

| Mileage | 12000 n.mile |
|---|---|
| Speed | 15kn |
| Reserve | 3 days |
| Methanol consumption of the main engine | 125.3t/day |
| Methanol consumption of generator | 13.3t/day |
| Methanol consumption in boilers | 350t |
| Ignition oil | 180t |
| Availability | 93% |
| Methanol fuel tank capacity | 7329m$^3$ |

$$C = ((12000 \div 15 \div 24 + 3) * (13.3 + 125.3) + 350) / (0.79 * 93\%) = 7330 \text{ m}^3.$$

$$Ac = D*B1 = 28.6*(20.4 - 1.2*2) = 514.8 \text{m}^2.$$

$$B1 = 18\text{m}.$$

$$Ln = 7330/514.8 = 14.2.$$

$$L1 = 14.2 + 1.2*2 = 16.6\text{m}.$$

$$S = 5.670\text{m}.$$

L1/S=16.6/5.67=2.93. After rounding to the nearest integer, Ni=3, which means the methanol fuel tank occupies a space equivalent to the length of three strong frame spacings in the cargo tank area.

In <B1, the newly added bulkhead 6 originates from bulkheads 1 and 10.

Where U=1.9m; W=1.4m, R=1.4m, and P=2.0m.

$$\text{Final } L11=3 * 5.67-2 * 1.4=14.21\text{m}.$$

$$B11=20.4-2*1.4=17.6\text{m}.$$

$$C1=L11*B11*D=7152.7\text{m}^3.$$

C1/C=7152.7/7330=97.6%>95%, which meets the requirement.

**Claims**

1. A method for installing embedded methanol fuel tanks in ultra-large crude oil carrier, **characterized in that** multiple rows of cargo tanks are arranged in the cargo area, with the center of each row of cargo tanks being a middle cargo tank, and side cargo tanks arranged on both sides of the middle cargo tank, a first transverse bulkhead is added in one of the middle cargo tanks, with both ends of the first transverse bulkhead intersecting and fixed with the longitudinal bulkheads of the middle cargo tank, a methanol fuel tank is arranged between the first transverse bulkhead and the transverse bulkhead of the middle cargo tank, the methanol fuel tank is a cubic container composed of two newly added transverse bulkheads and two newly added longitudinal bulkheads, the methanol fuel tank is surrounded by isolation tanks, with the original bulkheads of the middle cargo tank and the newly added bulkheads of the methanol fuel tank serving as the bulkheads of the isolation tanks, horizontal girders are arranged on the outer surfaces of the front and rear isolation tanks of the methanol fuel tank, the specific design method of the methanol fuel tank is as follows:

   S1: Determine the capacity C of the methanol fuel tank

   $$C=\{(M/V/d+n) * (P1+P2) + P3\} / (\rho*R);$$

   Where M represents mileage;
   V represents the speed;
   d represents the number of days;
   P1 represents the daily methanol consumption of the generator;
   P2 represents the daily methanol consumption of the main engine;
   P3 represents the daily methanol consumption of the boiler;
   n represents the reserve quantity;
   $\rho$ represents the density of methanol;
   R represents the fuel filling degree = according to the IGF low flash point, the fuel filling degree is 95%-2% = 93%;
   S2: Based on the tank capacity C obtained in step S1, the total length L1 and width B1 of the methanol fuel tank are initially determined
   The length of the methanol fuel tank is Ln=C/Ac-2W, measured in meters;
   The total length of the methanol fuel tank L1= C/Ac= Ln+2W;
   Where Ac represents the cross-sectional area of the methanol fuel tank, Ac=D*B1, measured in square meters $m^2$;
   B1=B-2R, measured in meters;
   D represents the average height of the clean methanol fuel tank, measured in meters;
   W represents the width of the transverse isolation tank on both sides outside the methanol fuel tank, measured in meters;
   R represents the width of the longitudinal isolation tank on both sides outside the methanol fuel tank, measured in meters;
   B represents the maximum width of the cargo tank;
   S3: Determine the number of strong frame spacings, Ni, within the cargo hold section occupied by the methanol

fuel tank
When

$$L1/S - [L1/S] \leq 0, \ Ni = [L1/S];$$

When

$$L1/S - [L1/S] > 0, \ Ni = [L1/S] + 1;$$

Where [L1/S] represents the integer part of the calculated value;

S4: Determine the relative positions of the newly added transverse bulkheads and longitudinal bulkheads

When B1 > L1, the two ends of the newly added longitudinal bulkhead intersect and are fixed with the first transverse bulkhead and the middle cargo tank transverse bulkhead respectively, with the end of the newly added longitudinal bulkhead aligned with the reinforcement ribs on the first transverse bulkhead; the end of the newly added transverse bulkhead intersects and is fixed with the newly added longitudinal bulkhead;

When L1 ≥ B1, the two ends of the newly added transverse bulkhead intersect and are fixed with the longitudinal bulkhead of the middle cargo tank; the end of the newly added longitudinal bulkhead intersects and is fixed with the newly added transverse bulkhead, and the end of the newly added longitudinal bulkhead aligned with the reinforcement ribs on the newly added transverse bulkhead;

The distance between the newly added longitudinal bulkhead and the longitudinal bulkhead of the middle cargo tank is R, R ≥ 600 + M, and M represents the spacing between adjacent reinforcement ribs on the longitudinal bulkhead of the middle cargo tank;

The distance between the newly added transverse bulkhead and the transverse bulkhead of the middle cargo tank is W, R ≥ W ≥ 600 + V, and V represents the spacing between adjacent reinforcement ribs on the transverse bulkhead of the middle cargo tank;

Finally, the length of the methanol fuel tank is determined as L11=S*Ni-2W, and the width of the methanol fuel tank is determined as B11=B-2R;

S5: In the side cargo tanks located on both sides of the middle cargo tank where the methanol fuel tank is situated, anti-sway bulkheads are installed, these anti-sway bulkheads are connected to the first transverse bulkhead, forming a continuous bulkhead within the side cargo tanks and the middle cargo tank, the anti-sway bulkheads are equipped with horizontal girders, which have the same number and position as the horizontal girders on the first transverse bulkhead;

S6: Set up the crossbeam

The methanol fuel tank compartment divides the original cargo tank into a methanol fuel tank area and a cargo area, while the anti-sway bulkhead divides the side cargo tank into two areas, the length of the methanol fuel tank area is L2, and the length of the cargo area is L3;

When

$$2 \leq Ni \leq 3,$$

L3>L2, with multiple crossbeams arranged within the cargo tank area of the main cargo tank;

B1>L1, the horizontal girder width of the first transverse bulkhead is U, T/2 ≥ U ≥ 600mm; the horizontal girder width of the transverse bulkhead in the middle cargo tank is P, 2T/3 ≥ P ≥ U, and T represents the horizontal girder width of the transverse bulkhead in the middle cargo tank;

When

$$3 < Ni \leq 5,$$

L3<L2, multiple crossbeams are arranged in the side cargo tank,

Multiple crossbeams are arranged in the side cargo tank, corresponding to the cargo tank area of the middle cargo tank;

Within the side cargo tank, a crossbeam is installed at a location corresponding to the methanol fuel tank area in the middle cargo tank, which divides the area corresponding to the methanol fuel tank into an M area with a length of M and a Q area with a length of Q,

The length of the methanol fuel tank area is Ni*S,

2 ≤ Q ≤ M ≤ 3, Q = 2, if Ni is even, a horizontal brace is set at Q = Ni*S/2;

If Ni is an odd number, a horizontal brace is set at Q = (Ni-1) *S/2;

L1>B1, the horizontal girder width of the first transverse bulkhead is U, with $T/2 \geq U \geq 600mm$;
the horizontal girder width on the transverse bulkhead of the middle cargo tank is P, with $2T/3 \geq P \geq U$, where T represents the width of the original horizontal girder 9 of the middle cargo tank transverse bulkhead 10;
When

$$6 \leq Ni < N\text{-}1,$$

$L3 \leq 0.5*L2$, $L1 > B1$, the anti-sway bulkhead within the side cargo tank is a bidirectional panel, and the crossbeam is arranged within the methanol fuel tank;
The length of the methanol fuel tank is Ni*S, and two crossbeams divide the side cargo tank into compartments with lengths N, M, and Q along the length direction, where $N \geq M \geq Q$, $2 \leq Q \leq M \leq N \leq 3$,
If Ni is not a prime number, two crossbeams are set at equal intervals within the side cargo tank, with the crossbeam panels facing forward;
If Ni is a prime number, the crossbeam should be positioned at the combination of 2S and 3S, with 3S situated near the anti-sway bulkhead, and the crossbeam panel facing the anti-sway bulkhead;
The horizontal girder width of the first transverse bulkhead is U, with $T2/3 \geq U \geq 600mm$, the horizontal girder width on the transverse bulkhead of the middle cargo tank is P, with $2T/3 \geq P \geq U$, where T represents the original horizontal girder width of the middle cargo tank transverse bulkhead.

2. The method for installing embedded methanol fuel tanks in ultra-large crude oil carrier as claimed in claim 1, **characterized in that** multiple rows of cargo tanks are arranged along the length of the ship in the cargo area, with each row of cargo tanks consisting of a central cargo tank and side cargo tanks arranged sequentially from the center of the hull towards the ship's sides.

3. The method for installing embedded methanol fuel tanks in ultra-large crude oil carrier as claimed in claim 1, **characterized in that** in step S1, n=3 and $\rho$=0.79 t/m3.

4. The method for installing embedded methanol fuel tanks in ultra-large crude oil carrier as claimed in claim 1, **characterized in that**, in step S2, W is initially set to 1.2m, and R is initially set to 1.2m.

5. The method for installing embedded methanol fuel tanks in ultra-large crude oil carrier as claimed in claim 1, **characterized in that** the forward isolation tank is composed of a first transverse bulkhead, an additional transverse bulkhead, and an additional longitudinal bulkhead, while the aft isolation tank is composed of an additional transverse bulkhead, a middle cargo tank transverse bulkhead, and an additional longitudinal bulkhead.

6. The method for installing embedded methanol fuel tanks in ultra-large crude oil carrier according to claim 1, **characterized in that** the first transverse bulkhead is fixed at the strong structure of the middle cargo tank.

7. The method for installing embedded methanol fuel tanks in ultra-large crude oil carrier as claimed in claim 1, **characterized in that** the width of the horizontal girder (3) is designed in accordance with the requirements of Part 2, Chapter 2, Section 3 of the Common Structural Rules for Bulk Carriers and Oil Tankers, an industry standard of the International Association of Classification Societies. The number and positions of horizontal girders (3) on the outer surfaces of the forward and aft isolation tanks of the methanol fuel tank are the same.

8. The method for installing embedded methanol fuel tanks in ultra-large crude oil carrier as claimed in claim 1, **characterized in that** the number of reinforcing ribs on the first transverse bulkhead, the newly added transverse bulkhead, and the middle cargo tank transverse bulkhead, as well as the spacing between adjacent reinforcing ribs, are all the same.

9. The method for installing embedded methanol fuel tanks in ultra-large crude oil carrier as claimed in claim 1, **characterized in that** the methanol fuel tanks are equipped with a strong frame spacing of S, and the number of strong frame spacings is N, where 6<N<10.

| Cargo hold on the left side of X | Cargo hold on the left side of Y |
|---|---|
| Cargo hold on the middle of X | Cargo hold on the middle of Y |
| Cargo hold on the right side of X | Cargo hold on the right side of Y |

Figure 1

Figure 2

Figure 3

Figure 4

trepanning trepanning trepanning

trepanning trepanning

Figure 5

B    A  C

trepanning    trepanning

trepanning

trepanning

trepanning

trepanning

trepanning

7

trepanning

9

trepanning

trepanning    trepanning

B    A C

Figure 6

B F    A E

trepanning          trepanning

B F    A E

Figure 7

| Cargo hold on the left side of X | | Cargo hold on the left side of Y |
|---|---|---|
| Cargo hold on the middle of | Methanol fuel tank | Cargo hold on the middle of Y |
| Cargo hold on the right side of X | | Cargo hold on the right side of Y |

Figure 8

Figure 9

Figure 10

Figure 11

Figure 12

"B–B"

trepanning

trepanning

Figure 13

"E–E"

trepanning

trepanning

Figure 14

"A-A"

trepanning     trepanning     trepanning

8

Figure 15

"B-B"

1

trepanning     trepanning

2     2

13

Figure 16

"E–E"

Figure 17

"G–G"

Figure 18

"A-A"

trepanning     trepanning     trepanning

14

8

Figure 19

"B-B"

trepanning                 trepanning

Figure 20

"E-E"

5

trepanning     trepanning

Figure 21

"G-G"

6

Figure 22

Figure 23

## INTERNATIONAL SEARCH REPORT

| International application No. |
| --- |
| **PCT/CN2024/128854** |

| A. | CLASSIFICATION OF SUBJECT MATTER |
| --- | --- |

B63B11/04(2006.01)i;  B63B11/02(2006.01)i;  B63B71/00(2020.01)i

According to International Patent Classification (IPC) or to both national classification and IPC

| B. | FIELDS SEARCHED |
| --- | --- |

Minimum documentation searched (classification system followed by classification symbols)

IPC:B63B11,B63B71

Documentation searched other than minimum documentation to the extent that such documents are included in the fields searched

Electronic data base consulted during the international search (name of data base and, where practicable, search terms used)

CNTXT, ENTXTC, DWPI, CJFD: 大连船舶重工集团, 油船, 货舱, VLCC, 甲醇, 燃料, 嵌入, 长度, 宽度, 横撑, 横舱壁, 纵舱壁, 制荡, 舱容, methanol, methyl, transverse, bulkhead? , swash, capacity

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 117485470 A (DALIAN SHIPBUILDING INDUSTRY CO., LTD.) 02 February 2024 (2024-02-02)<br>  claims 1-9, description, paragraphs 0092-0167, and figures 1-23 | 1-9 |
| A | CN 115817707 A (NANTONG COSCO KHI SHIP ENGINEERING CO., LTD.) 21 March 2023 (2023-03-21)<br>  description, paragraphs 0024-0046, and figures 1-4 | 1-9 |
| A | CN 216185803 U (DALIAN SHIPBUILDING INDUSTRY CO., LTD.) 05 April 2022 (2022-04-05)<br>  entire document | 1-9 |
| A | CN 116923627 A (NO.708 INSTITUTE OF CHINA STATE SHIPBUILDING CORP.) 24 October 2023 (2023-10-24)<br>  entire document | 1-9 |
| A | KR 20220081889 A (DAEWOO SHIPBUILDING & MARINE ENGINEERING) 16 June 2022 (2022-06-16)<br>  entire document | 1-9 |

☐ Further documents are listed in the continuation of Box C.    ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **07 January 2025** | **20 January 2025** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2024/128854**

| Patent document cited in search report | | | Publication date (day/month/year) | Patent family member(s) | | | Publication date (day/month/year) |
|---|---|---|---|---|---|---|---|
| CN | 117485470 | A | 02 February 2024 | None | | | |
| CN | 115817707 | A | 21 March 2023 | None | | | |
| CN | 216185803 | U | 05 April 2022 | None | | | |
| CN | 116923627 | A | 24 October 2023 | None | | | |
| KR | 20220081889 | A | 16 June 2022 | KR | 20230041985 | A | 27 March 2023 |
| | | | | KR | 102647307 | B1 | 14 March 2024 |

Form PCT/ISA/210 (patent family annex) (July 2022)